# EUROPEAN PATENT APPLICATION

(11) **EP 2 395 630 A1**
(43) Date of publication of application: **14.12.2011**
(21) Application number: 10165511.6
(22) Date of filing: 10.06.2010
(51) Int. Cl.: H02K 1/27

(54) **A permanent magnet machine, in particular a generator for a wind turbine**

(71) Applicant: SIEMENS AKTIENGESELLSCHAFT, 80333 München (DE)
(72) Inventor: Semmer, Silvio, 7330, Brande (DK)

(57) **Abstract**

A permanent magnet machine, in particular a generator for a wind turbine, comprising:
- a stator with a plurality of induction coils;
- a rotor, rotatable around the stator, with a plurality of permanent magnets arranged in circumferential direction forming a number of poles, whereby each pole (12, 23, 25, 29) comprises two or more neighbouring magnets (13, 14, 15, 16, 18, 19, 21, 22, 26, 30) magnetised in the same direction.

## Description

The present invention relates to a permanent magnet machine, in particular a generator for a wind turbine, comprising a stator with a plurality of induction coils, a rotor, rotatable around the stator, with a plurality of permanent magnets arranged in circumferential direction forming a number of poles.

Wind turbines are provided with a rotor shaft which is part of an electrical generator producing electricity during a movement of the rotor relative to the stator of the permanent magnet machine which is used as a generator. The stator comprises a number of coils, the rotor comprises a number of permanent magnets so that an electric voltage is induced when the rotor is turned.

Permanent magnet machines in general suffer from an effect which is induced by the interaction between the permanent magnets of the rotor and the form of the stator, this effect is known as cogging torque. Conventional stators comprise a number of teeth or slots for stator coils. The reason for the generation of cogging torque is the change of magnetic resistance when a magnet passes the teeth and slots of a stator. The change of magnetic resistance induces a changing force or torque acting upon the rotor and causing torque ripple. Such torque ripple adds unwanted harmonic components resulting in torque pulsation upon operation of the permanent magnet machine. Although net torque ripple is zero cogging torque causes noise and additional stress on the structure of a wind turbine.

It is therefore an object of the present invention to provide a permanent magnet machine which exhibits less cogging torque.

According to the present invention this object is achieved in the above defined permanent magnet machine in that each pole comprises two or more permanent magnets magnetised in the same direction.

The present invention is based on the idea that the unwanted cogging torque can be reduced by splitting one pole into two or more magnets so that the change of magnetic resistance when the rotor is turning is lowered, causing less cogging torque. When cogging torque is reduced torque ripple will be reduced as well.

According to the invention the magnets of a pole can be disposed with a certain distance between them. Basically one pole can comprise two single magnets which are disposed with a certain distance between them which have the same polarisation. With such an arrangement the change of magnetic resistance is lower compared to one conventional pole consisting of only one single magnet.

According to a further development of the present invention all permanent magnets can be arranged equidistantly. This means that the distance between neighbouring magnets with the same polarity is the same as the distance between neighbouring magnets with opposite polarity.

According to the invention each pole may comprise an even number of permanent magnets, namely 4, 6 or 8 magnets. It is important that splitting of the permanent magnets does not influence the magnetisation direction, because the 4, 6 or 8 magnets which are arranged next to each other all have the same magnetisation direction, whereas the number of poles does not change.

In the inventive permanent magnet machine the permanent magnets may have a non-rectangular shape. It has been found that the rectangular shape also accounts for the generation of cogging torque. Therefore it can be envisaged that the permanent magnets have a different shape which reduces the amount of cogging torque. In this regard it is particular preferred that the corners of the permanent magnets are rounded down. When the free corners of the permanent magnets are rounded down a positive influence on the cogging torque and torque ripple can be observed.

According to the inventive permanent magnet machine the permanent magnets can be arranged opposite of the stator teeth, whereby the width of a permanent magnet is equal or lower than the width of a stator tooth. The underlying idea is that the width of the permanent magnets of one pole can be adjusted in order to generate a certain amount of magnetic flux.

Further the invention relates to a wind turbine.

According to the invention the wind turbine comprises a permanent magnet machine as described above.

The invention and its underlying principle will be better understood when consideration is given to the following detailed description of preferred embodiments.

In the accompanying drawings:
- Fig. 1: is a sectional view of a conventional permanent magnet machine for a wind turbine;
- Fig. 2: is a sectional view of a first embodiment of an inventive permanent magnet machine;
- Fig. 3: is a sectional view of a second embodiment of an inventive permanent magnet machine;
- Fig. 4: is a sectional view of a third embodiment of an inventive permanent magnet machine;
- Fig. 5: is a sectional view of a forth embodiment of an inventive permanent magnet machine; and
- Fig. 6: is a sectional view of a fifth embodiment of an inventive permanent magnet machine.

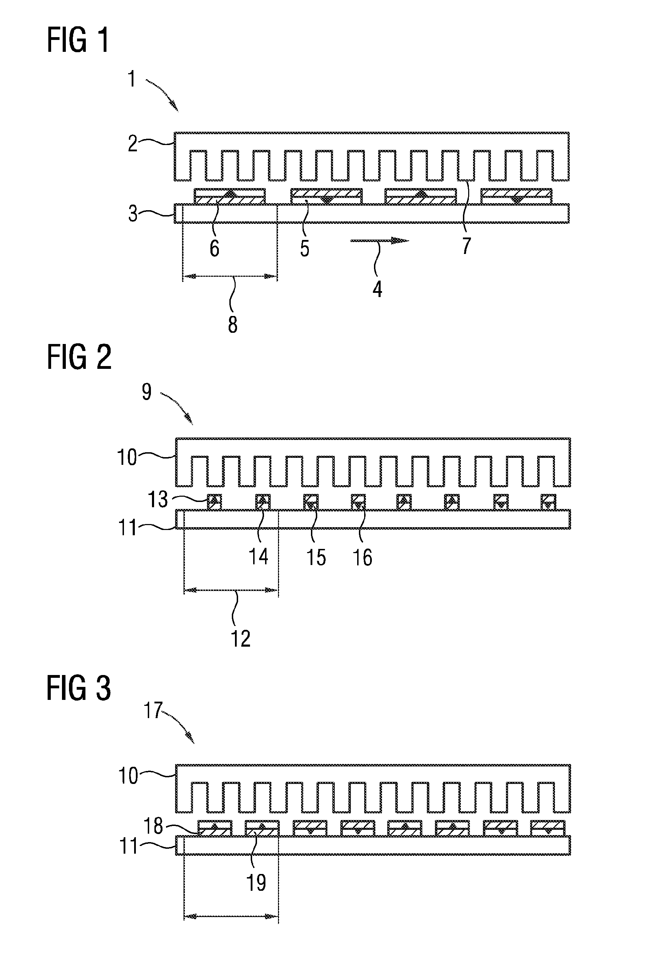

Fig. 1 shows a conventional permanent magnet machine 1 which is used as a generator for a wind turbine. The stationary stator 2 is usually incorporated into a nacelle which is positioned on top of a tower of the wind turbine. A rotor 3 is rotatably movable around stator 2. In fact stator 2 and rotor 3 are slightly curved, however, in the schematic drawing of fig. 1 stator 2 and rotor 3 are depicted in a flat projection. An arrow 4 shows the circumferential direction along which rotor 3 is turned.

As can be seen in fig. 1 a number of permanent magnets 5, 6 is positioned on one side of rotor 3. The stator 2 comprises multiple stator teeth extending vertically towards rotor 3. Each stator tooth 7 is provided with a stator coil, which is not shown in fig. 1. Each of the plural permanent magnets 5, 6 forms a pole 8, all poles are lined up alternating in succession, i.e. one permanent magnet with a north pole on top is followed by a permanent magnet with a south pole on top. The permanent magnet machine 1 of fig. 1 suffers from cogging torque due to the change of magnetic resistance when the rotor 3 is turned.

Fig. 2 shows a first embodiment of a permanent magnet machine 9 comprising a stator 10 and a rotor 11. In contrast to the permanent magnet machine 1 of fig. 1 the permanent magnet machine 9 has poles comprising two neighbouring magnets 13, 14 magnetised in the same direction. Permanent magnets 13, 14 are disposed on the rotor 11 with a certain distance between them. The width of pole 12 of the permanent magnet machine 9 is basically the same as the width of permanent magnet machine 1, however, due to the "split" permanent magnets 13, 14 the change of magnetic resistance when rotor 11 is turned is lower so that less cogging torque is generated. As can be seen in fig. 2 neighbouring permanent magnets 13, 14 are magnetised in the same direction, the neighbouring pair of permanent magnets 15, 16 is magnetised in the opposite direction whereby neighbouring magnets 15, 16 have an identical magnetisation direction. As an example in permanent magnets 13, 14 the north pole is on top whereas in permanent magnets 15, 16 the south pole is on top. As can be seen in fig. 2 the width of pole 12 is identical to the width of pole 8 in fig. 1. Therefore in the permanent magnet machine 9 of fig. 2 the width of a pole is the same as in a conventional pole, however, the change of magnetic resistance is lower when rotor 11 is rotated with regard to stator 10. As a result the cogging torque and subsequently torque ripple is considerably lowered compared to the permanent magnet machine 1.

Fig. 3 shows a second embodiment of a permanent magnet machine 17, whereby the same reference numbers are used for identical components. Permanent magnet machine 17 comprises a stator 10 and a rotor 11, on which permanent magnets are disposed. Two permanent magnets 18, 19 are used which are arranged next to each other which have the same magnetisation direction. The width of the permanent magnets 18, 19 is larger compared to the permanent magnets 13, 14 as shown in fig. 3. The width of the permanent magnets influences the magnetic flux and therefore the width of the permanent magnets can be adjusted in order to obtain a desired flux level.

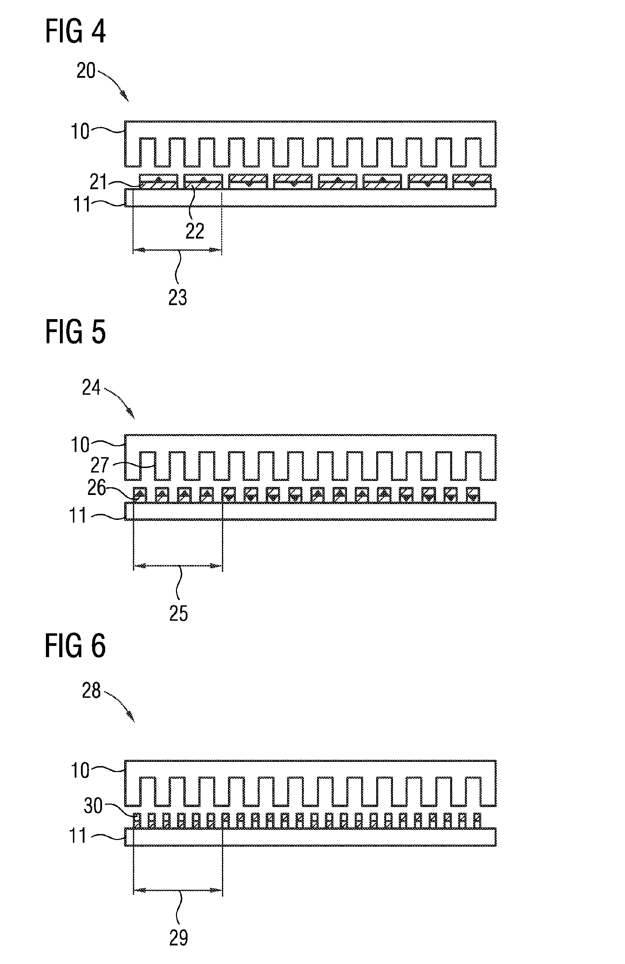

Fig. 4 shows a third embodiment of a permanent magnet machine 20 which is similar to the permanent magnet machine of fig. 3. The only difference is that the width of permanent magnets 21, 22 is even larger than those of permanent magnets 18, 19 of fig. 3. However, the width of pole 23 is the same as the width of pole 12 or pole 8. The permanent magnets 21, 22 of fig. 4 have a non-rectangular shape. The corners of the free ends of the magnets 21, 22 are rounded down, which leads to a further decrease of the cogging torque.

Fig. 5 shows a fourth embodiment of a permanent magnet machine 24 where a pole 25 comprises four neighbouring magnets 26 magnetised in the same direction. The width of one single permanent magnet 26 is essentially the same as the width of a stator tooth 27.

Fig. 6 shows a fifth embodiment of a permanent magnet machine 28. In the permanent magnet machine 28 of fig. 6 each pole 29 comprises six permanent magnets 30 magnetised in the same direction. As a result the change of magnetic resistance is even lower compared to the embodiment of fig. 5 so that cogging torque is further reduced.

## Claims

1. A permanent magnet machine, in particular a generator for a wind turbine, comprising:
- a stator with a plurality of induction coils;
- a rotor, rotatable around the stator, with a plurality of permanent magnets arranged in circumferential direction forming a number of poles, **characterised in that** each pole (12, 23, 25, 29) comprises two or more neighbouring magnets (13, 14, 15, 16, 18, 19, 21, 22, 26, 30) magnetised in the same direction.

2. A permanent magnet machine according to claim 1, **characterised in that** the magnets (13, 14, 15, 16, 18, 19, 21, 22, 26, 30) of a pole (12, 23, 25, 29) are disposed with a certain distance between them.

3. A permanent magnet machine according to claim 1 or 2, **characterised in that** all permanent magnets (13, 14, 15, 16, 18, 19, 21, 22, 26, 30) are arranged equidistantly.

4. A permanent magnet machine according to claim 1 or 2, **characterised in that** each pole (25, 29) comprises an even number of permanent magnets (26, 30), namely 4, 6 or 8.

5. A permanent magnet machine according to any of the preceding claims, **characterised in that** the permanent magnets (21, 22) have a non-rectangular shape.

6. A permanent magnet machine according to claim 5, **characterised in that** the corners of the permanent magnets (21, 22) are rounded down.

7. A permanent magnet machine according to any of the preceding claims, **characterised in that** a permanent magnet (26, 30) is arranged opposite of a stator tooth (27), whereby the width of a permanent magnet (26, 30) is equal or lower than the width of a stator tooth (27).

8. A wind turbine, comprising a permanent magnet machine (9, 17, 20, 24, 28) according to any of claims 1 to 7.
